Europäisches Patentamt

European Patent Office

Office européen des brevets

(19)

(11) Publication number : **0 475 870 A2**

## (12) EUROPEAN PATENT APPLICATION

(21) Application number : **91480118.8**

(22) Date of filing : **31.07.91**

(51) Int. Cl.⁵ : **G06F 3/033**

(30) Priority : **30.08.90 US 574997**

(43) Date of publication of application :
**18.03.92 Bulletin 92/12**

(84) Designated Contracting States :
**DE FR GB**

(71) Applicant : **International Business Machines
Corporation
Old Orchard Road
Armonk, N.Y. 10504 (US)**

(72) Inventor : **Fleming, Stephen S.
3633 Herschel Avenue
Dallas, TX 75219 (US)**

(74) Representative : **Tubiana, Max
Compagnie IBM France Département de
Propriété Intellectuelle
F-06610 La Gaude (FR)**

(54) Method of selecting and operating on objects in an interactive window system.

(57)    Disclosed is a method of performing an operation on a selected object. The method includes drawing a selection basket object on the computer system screen and placing the selected object in the selection basket object. After the object has been placed in the selection basket, the object is performed on the selection basket.

EP 0 475 870 A2

## BACKGROUND OF THE INVENTION

### Field of the Invention

The present invention relates generally to windowed computer user interfaces, and particularly to a graphical interface that supports direct manipulation of objects.

### Description of the Prior Art

In windowed computer user interfaces, the user may select objects to act upon. Selection is the act of marking a choice. The user may select 0, 1, or more objects. A user may also scroll the window, causing items to appear and disappear from direct view. During scrolling, a user's selection may no longer be immediately visible. Subsequent actions can affect selections, even though the selected objects are not visible.

If a user selects more than one object, it may not be possible to see all selections simultaneously. For example, in a large list of items it may not be possible to view simultaneously the first and last item of the list. Thus, if these two items are selected, it will not be possible to view both selections at once. Here the user is forced to remember what the other selections are, since they cannot be all viewed at the same time.

A typical user task involves scrolling information and selecting a number of objects or items on which to perform a action. For example, the user may scroll a list of mail received, and select individual mail items to print. Conventional user interface designs allow direct manipulation of a selected item to be interpreted as manipulating all selected items. Unfortunately, when scrolling to the end of a large list, unless the user has selected one of the items,at the very end of the list to print, current systems require user to scroll back to a selected item before direct manipulation can be used to print the selected items.

In many current applications, it is useful to select items in one application for processing in another application. A simple example of this is the mail printing scenario where the user selects a number of mail items to print and then drags them to the printer for processing. However, in some applications it is desirable to process selections dynamically or immediately as they are made. For example, items selected in a data table may be immediately summed in a separate report application. Current systems provide action bar techniques for performing this action once selections are made. However, no techniques are provided that allow the processing to be specified prior to making the selections.

In most situations, the user interface mechanism for mouse selection has been optimized for the selection of one item. When the user clicks the mouse, one item is selected and any other items are de-selected.

This saves the user from performing an extra step to de-select any other item. Selecting more than one item requires that the user hold down a keyboard augmentation key while using the mouse with the other hand to select an item. This presents added complexity to the user, requiring both hands and requiring the user to remember the correct augmentation key.

Conventional systems provide a mouse technique for selecting all items of a list. This is typically provided by means of a pull-down menu. Pull-downs are easily accessed using the mouse. However, this approach is inconsistent with the object-action user model. A pull-down action should apply to selected objects and not change the selection state of objects. In spreadsheets, clicking in the corner of the sheets selects all items. However, this technique does not generalize to other applications.

### Summary of the Invention

In the present invention, a selection basket object is positioned in the window for an application. The selection basket object is depicted using a small graphic that represents a container. In the preferred embodiment, the selection basket is placed within the unused area of the window. The selection basket graphically indicates whether 0, 1, several, or many selections have been made. An item may be added to the set of selections by dragging it to the selection basket object. The source object will then show selection highlighting. This allows multiple selections to be made without the use of a keyboard augmentation key. If an item from another application is dragged to the selection basket, it will be added to the window and selected.

To view a list containing only the selected items, the user may open the selection basket object. The selection basket is shown in a separate window with all items selected showing selection highlighting. The selection list is unique in that clicking on an item will toggle its selection state without affecting the other selections. If an item is de-selected, the next time the selection basket object is opened, the item will not be present, since it is no longer selected. An item may also be removed from the selection list by direct manipulation. For example, the item may be dropped back on the title bar mini icon for the list handler window.

### Brief Description of the Drawings

Figure 1 is a pictorial view of a window entitled "Workplace-Daily".

Figure 2 is a pictorial view similar to Figure 1 in which a window entitled "Folder-Project X" has been opened.

Figure 3 is a pictorial view similar to Figure 2 in which the object entitled "Document 2" has been selected.

Figure 4 is a pictorial view similar to Figure 3 in which the "Folder-Project X" window has been been scrolled and another object has been selected.

Figure 5 is a pictorial view similar to Figure 4 in which the "Selection Basket" window has been opened.

Figure 6 is a pictorial view similar to Figure 4 showing direct manipulation of the selection basket object.

Figure 7 is a flowchart of a preferred software implementation of the present invention.

Figure 8 is a flowchart showing details of the "Open Selections Listing Window" routine of Figure 7.

Figure 9 is a flowchart showing details of the "Perform Selection Basket Direct Manipulation Source Processing" routine of Figure 7.

Figure 10 is a flowchart showing an implementation of the "Perform Selection Basket Direct Manipulation Target Processing" routine of Figure 7.

Figure 11 is a flowchart showing an implementation of the "Update Selection Basket Display" routine of Figure 7.

Figure 12 is a flowchart showing an implementation of the "Perform Selections Listing Window Processing" routine of Figure 7.

Figure 13 is a flowchart showing an implementation of the "Perform Selection Basket Link Processing" routine of Figure 7.

Description of the Preferred Embodiment

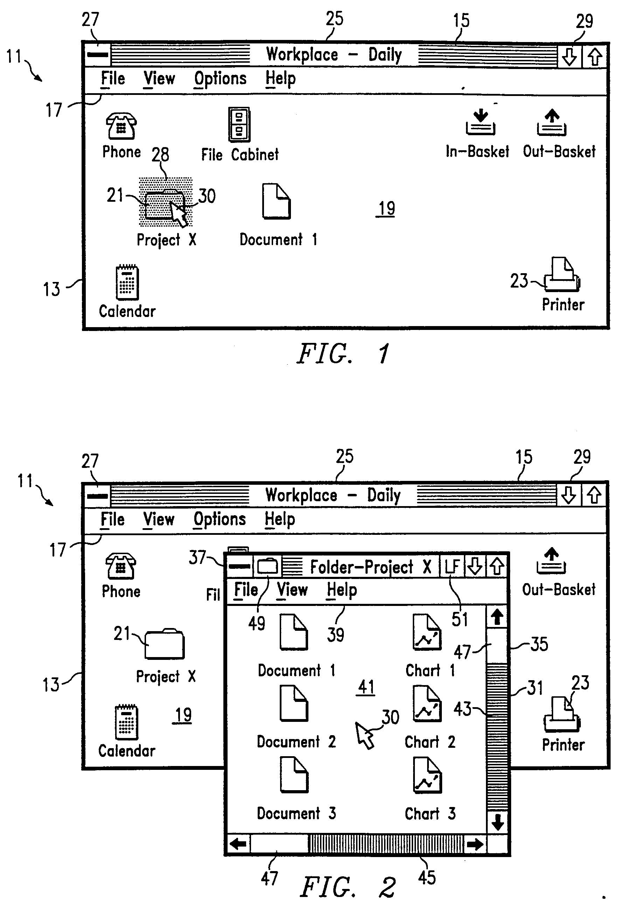

Referring now to the drawings, and first to Figure 1, a window is designated generally by the numeral 11. Window 11 includes a border or frame 13 that forms the outer boundary of the window. Contained within border 13 are a title bar 15, and an action bar 17. The remainder of window 11 consists of a client area 19, which is populated with a plurality of icons, including a folder icon 21, which is labeled "Project X", and a printer icon 23.

Title bar 15 includes a window title 25, which identifies the window, a system menu icon 27, and window sizing icons 29. System menu icon 27 allows the user to display a pull-down menu containing actions that the user can perform on the window. Such actions are related to the window itself and not to the object that is displayed in the window. For example, actions include MOVE, which allows the user to reposition the window of the screen, MINIMIZE, which reduces the size of the window, MAXIMIZE, which enlarges the window to the size of the screen. Window-sizing icons 29 provide a fast way to use a mouse or pointing device to perform the actions of MINIMIZE and MAXIMIZE without requiring a menu.

Action bar 17 contains a list of actions of the applications shown in the window. Each action in the list in action bar 17 has an associated pull-down menu that lists the individual actions that are contained within each general action listed in action bar 17. For example, the FILE pull-down enables the user to work with files through actions that manipulate the file as a whole. The individual actions contained within the FILE action include NEW, which allows users to create a new file, and SAVE, which writes the existing file to a storage device.

A pointer 30 is movable by the user by means of a mouse (not shown). The user can move pointer 30 about the screen and, by means of the mouse buttons, select objects, open windows, directly manipulate objects, and perform other operations. In Figure 1, folder 21 is shown high-lighted by means of a grey box 28. The highlighting indicates that folder 21 has been selected. The selection is made by positioning pointer 30 on folder 21 and clicking mouse button number one. The selected object is available for action.

Turning now to Figure 2, there is shown in addition to window 11, an object window 31. Object window 31 contains the contents of the "Project X" folder represented by icon 21. Window 31 was opened by choosing the "Open" option from the pull-down menu associated with the "File" action of action bar 17. Window 31 could also be opened by placing pointer 30 on folder 21 and double clicking mouse button number one.

Window 31 is similar to window 11 in that it includes a frame 35, a title bar 37, an action bar 39, and a client area 41 that is populated with a plurality of document and chart icons. Window 31 also includes scroll bars 43 and 45, which allow the user, in effect, to move window frame 35 to view parts of the object within client area 41. Each scroll bar 43 and 45 contains a slider box 47, which represents the position and size of the visible information in relation to all the information that is available. For example, if slider box 47 is one-third of the way down from the top of scroll bar 43, the portion of information the user sees is one-third of the way down from the top of the information.

Title bar 37 includes, in addition to the elements discussed in connection with title bar 15, a window title bar mini-icon 49, which is described in co-pending application Serial No. 07/522,300, filed May 19, 1990, and a selection basket object icon 51.

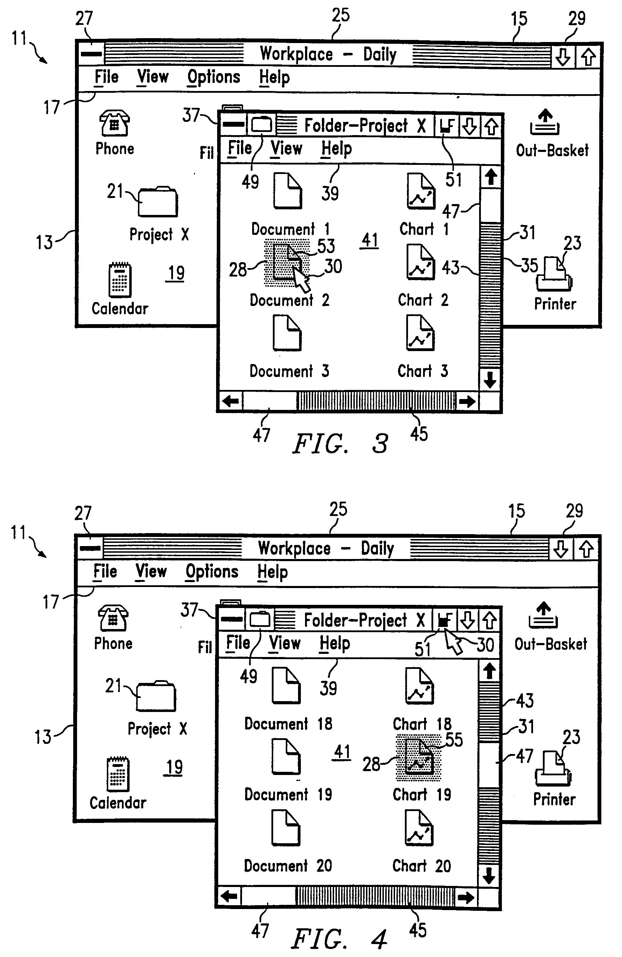

Referring now to Figure 3, "Document 2" icon 53 has been selected. Document icon 53 was selected by placing pointer 30 thereon and clicking mouse button one. Alternatively, and in accordance with the present invention, document icon 53 could have been selected by dragging document icon 53 to selection basket object icon 51. Dragging is accomplished by positioning pointer 30 on document icon 53 and moving pointer 30 to selection basket object 51 with mouse button number two depressed. Such direct manipulation of document icon 53 results in its selection. Whether the selection is accomplished by pointing and clicking, or by direct manipulation, the selection of document icon 53 is indicated by the highlight box 28 on document icon 53 and by the partially filled representation of selection basket object icon 51.

Referring now to Figure 4, window 31 has been scrolled to make visible additional items in client area 41. Slider bar 47 indicates that window 31 has been scrolled to a position approximately midway between its top and bottom. Highlighting box 28 indicates that the icon 55 for the object entitled "chart 19" has been selected. Selection basket object icon 51 indicates that more than one object has been selected.

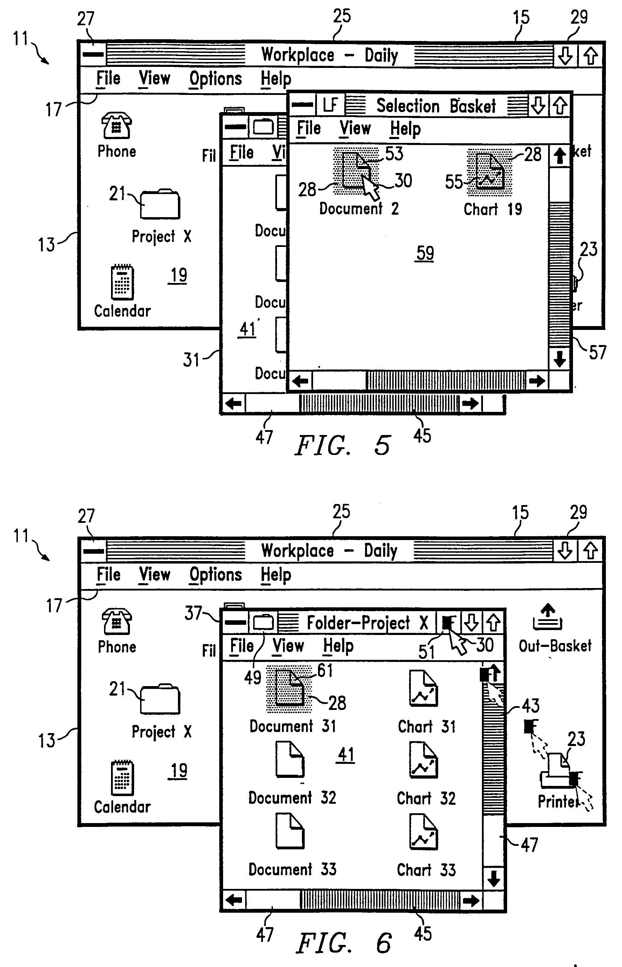

Referring to Figure 5, a selection basket window 57 has been opened. Selection basket window 57 is preferably opened by moving pointer 30 to selection basket object icon 51 and double clicking mouse button number one (see fig.4). Selection basket window 57 is similar to windows 11 and 31 and it includes a client area 59 that contains the selected items, which are document icon 53 and chart icon 55. Selection basket window 57 allows the user to see the selections that have been made. Each selected item in selection basket window 57 has a highlighting box, which indicates that the item has been selected. The user can de-select items from the selection basket object by moving pointer 30 to the item to be de-selected and clicking mouse button number one. Such action causes the high-lighting box 28 associated with the de-selected object to be deleted. However, as long as selection basket window 57 remains open, the de-selected object remains visible so that it may be re-selected by clicking on that object. When selection basket window 57 is closed, any de-selected items are removed from the selection basket object. If selection basket window 57 is reopened, previously de-selected objects will not appear.

Referring to Figure 6, selection basket window 57 has been closed and window 31 has been scrolled to the bottom. An additional selection has been made, as indicated by the highlighting box on document icon 61. Selection basket object 51 graphically indicates that more than two selections have been made. Figure 6 depicts the direct manipulation of selection basket object icon 51 to print the selected objects. Selection basket object icon 51 is directly manipulated by diagging it to printer icon 23. When selection basket object icon 51 is dropped on printer icon 23, the selected documents and charts will be printed.

In addition to individual selections, as described as above, all items in the folder may be selected by dragging folder mini-icon 49 to selection basket 51. Such direct manipulation would cause all of the items in folder 21 to be selected and highlighting box 28 would be displayed on each item. This select all feature is particularly useful when the user desires to select most of the items in the folder. The user can then open selection basket window 57 and de-select any unwanted items.

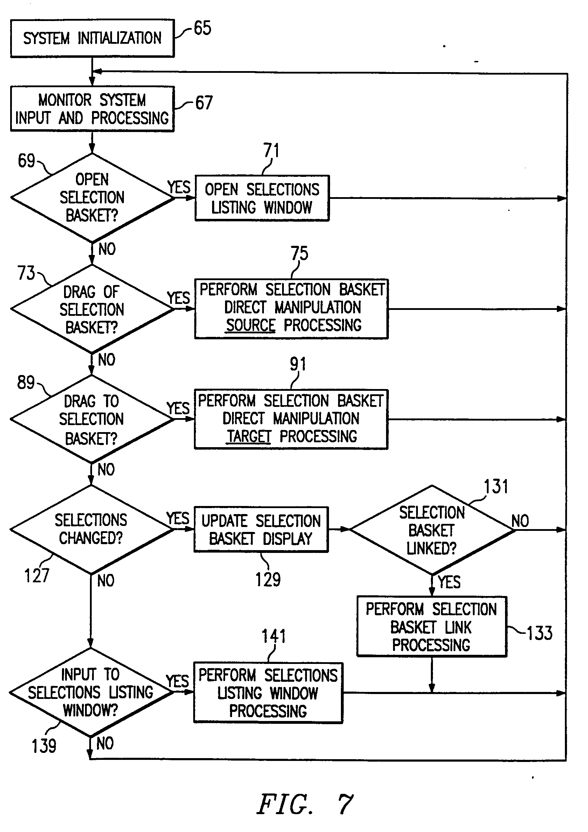

Referring now to Figure 7, there is shown a flowchart of a preferred software implementation of the present invention. The system is initialized at block 65. System initialization includes conventional steps such as selecting the programs, loading the programs, addressing the data and opening storage, and displaying the data and the pointer on the computer display screen. After the system has been initialized, system input and processing are monitored at block 67. Such monitoring includes monitoring the position of the pointer and the conditions of the mouse buttons and keyboard augmentation keys.

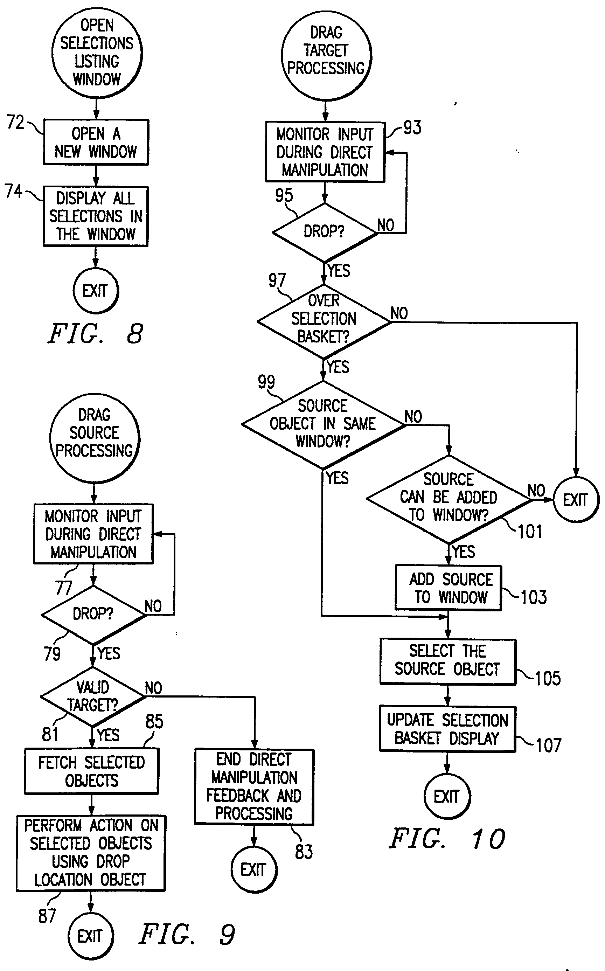

Referring to decision block 69, if the user opens the selection basket, then the system at block 71 opens the selections listing window. Then open selections listing window routine shown generally at block 71 is shown in greater detail in Figure 8, and it includes opening a new window at block 72 and displaying all selections in the window at block 74. After the selections listing window has been opened, the system returns to block 67 to continue monitoring the inputs.

Referring to decision block 73, if the user drags the selection basket, then the system performs selection basket direct manipulation source processing at block 75. The selection basket direct manipulation source processing routine of block 75 as shown in greater detail in Figure 9. The input in monitored at block 77 until a drop occurs at decision block 79. A drop occurs when mouse button 2 is released. When a drop does occur, then the system tests, at decision block 81, whether the selection basket source object is over a valid target. If it is not, then direct manipulation feedback and processing ends, at block 83, and the system returns to block 67 to continue monitoring system input. If, on the other hand, the target is valid, then the selected objects are fetched at block 85 and the indicated action is performed on the selected objects at block 87. When the action is completed, the system again returns to monitor input at block 67.

Referring again to Figure 7, if, at decision block 89, the user drags another object to the selection basket, then the system performs selection basket direct manipulation target processing at block 91. Referring particularly to Figure 10, which shows details of the drag target processing, the input is monitored at block 93 during direct manipulation. As shown at decision block 95, the system continues to monitor input until a drop occurs. If a drop occurs, the system tests at decision block 97 whether the source object is over the selection basket. If it is not, then the system returns to block 67 to continue monitoring system input and processing. If the source object is dropped over the selection basket, then the system tests at decision block 99, whether the source object is in the same window. If it is not, then the system tests, at decision 101, whether the source can be added to the window. If it cannot, then the system returns to block 67 and continues to monitor the input. If, on the other hand, the source object can be added to the window, then, at block 103, it is added to the window. Then, the source object is selected at block 105 and the selection basket display is updated at block 107.

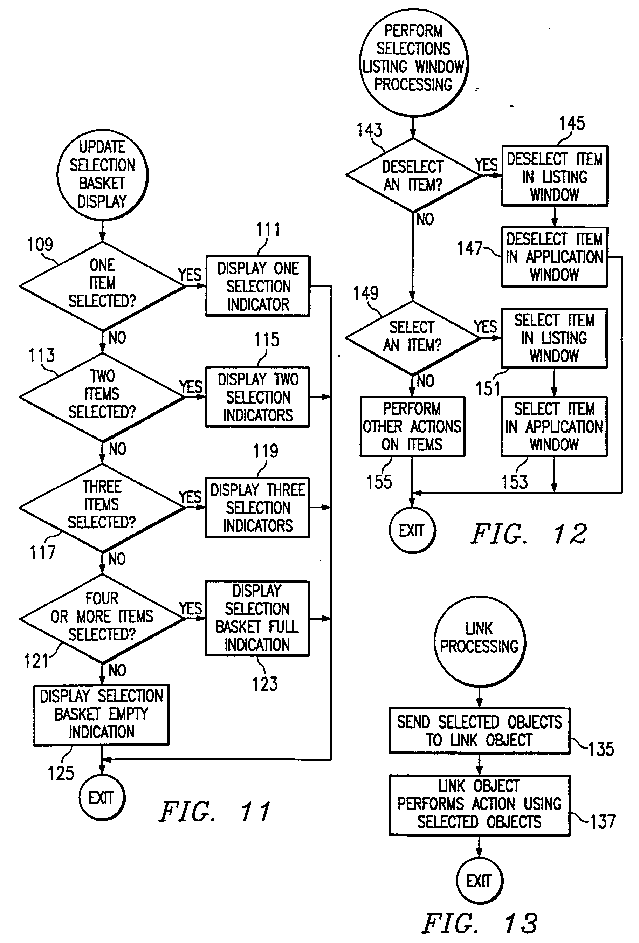

The routine that updates the selection basket display in block 107 is shown in greater detail in Figure 11. If, at decision block 109, one item is selected, then one selection indicator is displayed at block 111. If, at block 113, two items are selected, then two selection indicators are displayed at block 115. Similarly, if, at decision block 117, three items are selected, then three selection indicators are displayed at block 119. Finally, if, at decision block 121, four or more items are selected, then a selection basket full indication is displayed at block 123. If, on the other hand, no items are selected, then a selection basket empty indication is displayed at block 125 and the system returns to monitor system input and processing at block 67.

Referring again to Figure 7, the system then tests, at decision block 127, whether the selections have changed. If they have, then the selection basket display is updated at block 129. The selection basket display update routine was discussed in detail with respect to Figure 11 above.

After the selection basket display has been updated, the system tests whether or not the selection basket is linked at decision block 131. If it isn't, then the system returns to block 67 and continues to monitor input and processing. However, if the selection basket is linked, then the system performs selection basket link processing at block 133. Implementation of link processing is shown in Figure 13 and it includes sending selected objects to the link object at block 135. After the selected object has been sent to the link object, then the link object performs action using the selected objects at block 137 and the system returns to block 67 to continue to monitor input.

Finally, the system tests, at decision block 139, whether the input is to the selections listing window. If it is, then the system performs selections listing window processing at block 141. An implementation of the selections listing window processing step is shown in Figure 12. If, at decision block 143, an item is de-selected, the item is de-selected in the listing window, at block 145, and in the application window, at block 147. De-selection involves, among other things, removing the selection highlighting box from the de-selected object icon. If, at decision block at 149, an item in the listing window is selected, then the item is selected in the listing window at block 151 and in the application window at block 153. If the item is neither de-selected nor selected, then other actions are performed on the item at block 155 and the system returns to block 67 to continue monitoring input and processing.

From the foregoing, it may be seen that the present invention provides a number of advantages over the prior art. The user is provided with the direct indication of the relative number of selections present, whether or not they are visible. Additionally, the user is provided with a technique to make multiple selections without any augmentation keys, using only the mouse. The user can directly manipulate selections, even when they are not immediately visible. The user can view a concise list of the set of selected items and add or remove selections easily. The user can create a link between selections and some other application or item. This link affects both existing selections, if any, and selections made after the link is established.

While the invention has been particularly shown and described with reference to a preferred embodiment, those skilled in the art will understand that various changes in form and detail may be made without departing from the spirit and scope of the invention. For example, certain features of the invention may be used independently of other features.

## Claims

1. In a computer system that includes a display screen and a user operable means for manipulating objects on said screen, a method of performing an operation on a plurality of selected objects, which comprises the steps of:

    displaying a selection basket object on said screen;

    selecting a plurality of objects; and,

    performing said operation on said selection basket object.

2. The method as claimed in claim 1, wherein said step of selecting a plurality of objects includes the steps of:

    dragging each of said objects to said selection basket object.

3. The method as claimed in claim 2, including the step of:

    highlighting the objects when they are dragged to said selection basket object.

4. The method as claimed in claim 1, wherein said objects are displayed in window and said window includes a title bar mini-icon and said step of selecting a plurality of objects includes the step of:

    dragging the title bar mini-icon to the selection basket object to select all objects in said window.

5. The method as claimed in claim 1, wherein the step of performing said operation includes the steps of:

    dragging said selection basket object to a target object.

6. The method as claimed in claim 1, wherein said step of performing said operation on said selection basket object includes the steps of:

automatically performing said operation on each of said selected objects.

7. The method as claimed in claim 1, including the step of:

providing and updating a visual indication of the relative number of selected objects in said selection basket object.

8. The method as claimed in claim 1, including the step of:

opening said selection basket object to enable the user to view the selected objects in a window.

9. A method as claimed in claim 8, wherein said objects are selected from an original window and including the steps of:

de-selecting certain objects from said selection basket window; and,

automatically de-selecting the same objects in said original window.

10. A method of selecting objects for action in a computer system including a display screen and a user operated pointer which comprises the steps of:

displaying a selection basket object on the display screen;

inserting a copy of a selected object in said selection basket; and,

providing a visual indication of the relative number of selected objects in said selection basket object.

11. The method as claimed in claim 1, wherein said step of inserting a copy of a selected object includes the step of dragging said selected object to said selection basket object.

12. A method of enabling a computer system user to perform an operation on a plurality of selected objects capable of being displayed on a display screen, which comprises the steps of:

providing means for displaying a selection basket object on said screen;

providing means for selecting a plurality of objects; and,

providing means for performing said operation on said selection basket object.

FIG. 1

FIG. 2

FIG. 3

FIG. 4

FIG. 5

FIG. 6

SYSTEM INITIALIZATION — 65

MONITOR SYSTEM INPUT AND PROCESSING — 67

69 — OPEN SELECTION BASKET? — YES → OPEN SELECTIONS LISTING WINDOW — 71

NO

73 — DRAG OF SELECTION BASKET? — YES → PERFORM SELECTION BASKET DIRECT MANIPULATION SOURCE PROCESSING — 75

NO

89 — DRAG TO SELECTION BASKET? — YES → PERFORM SELECTION BASKET DIRECT MANIPULATION TARGET PROCESSING — 91

NO

SELECTIONS CHANGED? — YES → UPDATE SELECTION BASKET DISPLAY — SELECTION BASKET LINKED? — 131

127 — NO

129

NO

YES

PERFORM SELECTION BASKET LINK PROCESSING — 133

INPUT TO SELECTIONS LISTING WINDOW? — YES → PERFORM SELECTIONS LISTING WINDOW PROCESSING — 141

139 — NO

*FIG. 7*

FIG. 8

FIG. 9

FIG. 10

PERFORM
SELECTIONS
LISTING WINDOW
PROCESSING

143

DESELECT
AN ITEM? — YES → DESELECT ITEM
IN LISTING
WINDOW

145

NO

DESELECT ITEM
IN APPLICATION
WINDOW

147

UPDATE
SELECTION
BASKET
DISPLAY

109

ONE
ITEM
SELECTED? — YES → DISPLAY ONE
SELECTION
INDICATOR

111

NO

149

SELECT
AN ITEM? — YES → SELECT ITEM
IN LISTING
WINDOW

113

TWO
ITEMS
SELECTED? — YES → DISPLAY TWO
SELECTION
INDICATORS

115

NO

151

SELECT ITEM
IN APPLICATION
WINDOW

PERFORM
OTHER ACTIONS
ON ITEMS

155

117

THREE
ITEMS
SELECTED? — YES → DISPLAY THREE
SELECTION
INDICATORS

119

NO

153

EXIT

*FIG. 12*

121

FOUR
OR MORE ITEMS
SELECTED? — YES → DISPLAY
SELECTION
BASKET FULL
INDICATION

123

NO

LINK
PROCESSING

DISPLAY SELECTION
BASKET EMPTY
INDICATION

125

EXIT

*FIG. 11*

SEND SELECTED OBJECTS
TO LINK OBJECT

135

LINK OBJECT
PERFORMS ACTION USING
SELECTED OBJECTS

137

EXIT

*FIG. 13*